# EUROPÄISCHE PATENTSCHRIFT

(11) **EP 1 146 831 B1**
(45) Veröffentlichungstag und Bekanntmachung des Hinweises auf die Patenterteilung: **15.11.2006**
(21) Anmeldenummer: 00910624.6
(22) Anmeldetag: 28.01.2000
(51) Int. Cl.: A61C 1/08, A61C 8/00

(54) **AUFBAU EINER PROTHETISCHEN SUPRAKONSTRUKTION**
ASSEMBLY OF A PROSTHETIC SUPRACONSTRUCTION
ASSEMBLAGE D'UNE SUPRASTRUCTURE PROTHETIQUE

(30) Priorität: 29.01.1999 DE 19903482
(43) Veröffentlichungstag der Anmeldung: 24.10.2001
(73) Patentinhaber: ProFim Ltd., Huddersfield, West Yorkshire HD5 8QQ (GB)
(72) Erfinder: Unger, Dr. med. dent.,Heinz-Dieter, 49090 Osnabrück (DE)
(74) Vertreter: Habbel, Ludwig
(86) Internationale Anmeldenummer: PCT/EP2000/000674
(87) Internationale Veröffentlichungsnummer: WO 2000/044299

(56) Entgegenhaltungen:
- EP-A- 0 288 702
- WO-A-96/29019
- WO-A-97/09004
- WO-A-97/17907
- WO-A-98/42274
- US-A- 5 215 460
- US-A- 5 725 376

## Beschreibung

Die Erfindung bezieht sich auf ein Verfahren zum Aufbau einer prothetischen Suprakonstruktion auf einem oder mehreren Implantatkörper(n) nach dem Oberbegriff des Anspruchs 1.

Aus der WO 97/17907 A ist ein gattungsgemäßes Verfahren bekannt.

Aus der US 5 725 376 A ist ein Verfahren zur Herstellung einer Bohrschablone bekannt, welche dazu dient, den Kieferknochen eines Patienten anzubohren.

Aus der WO 97/09004 ist bekannt, zur Verankerung einer Suprakonstruktion auf einem lmplantatkörper einen Kugeladapter vorzusehen, der im Sinne einer optimalen Ausrichtung der Suprakonstruktion verschwenkt werden kann und in ausgerichteter Position durch Einsenken einer Fixierschraube in den Kugeladapter halterbar ist. Die Ausrichtung erfolgt im Mund des Patienten mittels einer Schablone. Dieses ist angesichts der beengten Platzverhältnisse und der Bewegungen des Patienten nicht optimal; die so festgelegte Suprakonstruktion ist nicht ohne weiteres reversibel abnehmbar.

Der Erfindung liegt das Problem zugrunde, den Aufbau einer ausrichtbaren prothetischen Suprakonstruktion zu vereinfachen und die Eigenschaften von Implantaten zu verbessern, insbesondere hinsichtlich ihres zuverlässigen Halts, ihrer Unanfälligkeit gegenüber Krankheitserregern sowie hinsichtlich Behandlungsmöglichkeiten nach ihrer Einpassung in den Mund des Patienten.

Die Erfindung löst das Problem durch ein Verfahren zum Aufbau einer prothetischen Suprakonstruktion mit den Merkmalen des Anspruchs 1.

Mit dem erfindungsgemäßen Verfahren sind die Ausrichtung und der Aufbau der Suprakonstruktion vollständig abseits des Patienten möglich und können zur Kostenersparnis beispielsweise durch einen Zahntechniker vorgenommen werden. Lediglich die anschließende Übertragung der ausgerichteten Suprakonstruktion sowie deren Feinanpassung (Abschleifen oder dergleichen) muß dann noch durch den behandelnden Arzt stattfinden.

Bei Verwendung eines geeigneten Implantatkörpers kann ein Transferkörper zur Erstellung eines Abdrucks unmittelbar und ohne Zwischenschaltung einer Hilfskonstruktion auf das koronale Implantatende aufgesetzt werden. Ein aufwendiges Verschrauben o. ä. ist damit entbehrlich. Wenn besonders vorteilhaft ein zweiteiliger lmplantatkörper mit einem in den Kieferknochen einsetzbaren Hülsenteil und einem darin abstützbaren Innenteil Verwendung findet, ist eine sehr große Haltekraft des Implantats sichergestellt, zudem kann das Innenteil zu Behandlungszwecken reversibel aus dem Hülsenteil entfernt werden. Eine geringe Belastung des Knochens resultiert insbesondere bei einer Verankerung des Hülsenteils über radial ausschiebbare Keile. Ein derartiger Implantatkörper kann selbstverständlich auch ohne Durchführung des erfindungsgemäßen Verfahrens zum Einsatz kommen. Eine Vorrichtung zur Entnahme eines Abdrucks, die den Implantatkörper und den aufzusetzenden Transferkörper umfaßt, ist zur formschlüssigen Verrasterung der Teile aneinander mit einem kreisförmigen Randbereich als Abstützung für den Transferkörper versehen, wodurch die Halterung der Teile aufeinander erleichtert ist. Besonders günstig ist der Randbereich des Implantatkörpers dabei als Hohlkehle ausgebildet.

Das den Implantatkörper und die aufgebaute Suprakonstruktion umfassende Implantat weist zur Verbindung der Teile einen Adapter auf, der in dem Innengewinde einer Ausnehmung im koronalen Ende des Implantatkörpers fixiert ist und dadurch einen besonders sicheren, gleichzeitig aber wieder lösbaren Halt erfährt. Wenn das Fixierungselement zweiteilig ausgebildet ist und als Konterglied zur Halterung beispielsweise einer Schraube einen beliebig ausrichtbaren Kugelteil aufweist, ist das in vivo schwierige Einschneiden eines Gewindes in das Konterglied entbehrlich; dieses kann industriell vorgefertigt werden. Es genügt dann, in einen in dem Innengewinde abgestützten Kappenteil eine gerichtete Durchgangsbohrung vorzunehmen und den Ankerteil, beispielsweise eine Schraube, in dem an die Innenseite des Kappenteils angepaßten Kugelteil zu kontern.

Zur Verhinderung der Einwanderung von Krankheitserregern können sowohl Dichtungsringe zwischen Innenteil und Hülsenteil vorgesehen sein als auch keilförmige Ausgleichsringe zwischen Implantatkörper und Suprakonstruktion, die gleichzeitig einen optisch vorteilhaften und bündigen Übergang zwischen diesen Teilen ausbilden.

Weitere Vorteile und Einzelheiten ergeben sich aus nachfolgend beschriebenen und in der Zeichnung dargestellten Ausführungsbeispielen des Gegenstandes der Erfindung.

In der Zeichnung zeigt:
- Fig. 1 bis Fig. 11: die Durchführung des erfindungsgemäßen Verfahrens zur Bildung von jeweils einer Suprakonstruktion auf jeweils einem Implantatkörper, darin
- Fig. 1: das Setzen der Pilotbohrung in den Kieferknochen,
- Fig. 2: das Einsetzen des Hülsenteils in die Pilotbohrung,
- Fig. 3: das Eindrehen eines Gewindevorschneiders in den Hülsenteil zur basalen Fortsetzung der Pilotbohrung,
- Fig. 4: die weitere Fortsetzung der Bohrung zur Aufnahme des den Hülsenteil basal überragenden Innenteils,
- Fig. 5: das Eindrehen des Innenteils des Implantatkörpers,
- Fig. 6: das Aufstecken des Transferkörpers auf den Implantatkörper,
- Fig. 7: eine Detailansicht der Verdrehsicherung zwischen Implantatkörper und Transferkörper,
- Fig. 8: die Entnahme eines Abdrucks der Zahnreihe mit dem auf den Implantatkörper aufgesetzten Transferkörper,
- Fig. 9: die erhärtete Abdruckmasse mit dem in dieser verbleibenden Transferkörper, auf den ein Ersatzimplantatkörper aufgesetzt wird,
- Fig. 10: die Herstellung des Meistermodells mit dem darin enthaltenen Ersatzimplantatkörper,
- Fig. 11: das fertige Meistermodell,
- Fig. 12: ein weiteres Meistermodell mit zwei Ersatzimplantatkörpern,
- Fig. 13: eine Parallelisierungsschablone mit von jeweils einer Hülse umgebenen stiftförmigen Richtelementen,
- Fig. 14: das Ausrichten der in die Ersatzimplantatkörper eingesetzten Richtelemente,
- Fig. 15: die Einbettung der Hülsen in eine aushärtbare Masse zur Ausbildung einer Bohrschablone,
- Fig. 16: das Einschrauben von in die Ausnehmung des Ersatzimplantatkörpers eingreifenden Kappenteilen,
- Fig. 17: die Vornahme der gerichteten Durchgangsbohrungen durch die Kappenteile,
- Fig. 18: die Montage eines Ankerteils in dem Fixierungselement,
- Fig. 19: das Aufsetzen eines mit seitlichem Gewinde versehenen Hülsenkörpers auf den Ankerteil
- Fig. 20: die aufgesetzten Suprakonstruktionen, die mit Zugang zum seitlichen Gewinde des Kronenkörpers versehen sind,
- Fig. 21: die fertigen Suprakonstruktionen auf dem Meistermodell
- Fig. 22 bis Fig. 26: ähnliche Schritte wie in Fig.1 bis Fig. 8 eines alternativen Verfahrens, darin
- Fig. 22: das Setzen einer Bohrung in den Kieferknochen,
- Fig. 23: das Einsetzen eines einteiligen Implantatkörpers in die Bohrung,
- Fig. 24: das Eindrehen des Implantatkörpers,
- Fig. 25: das Aufdrehen einer Einheilkappe auf den Implantatkörper,
- Fig. 26: das Herausdrehen der Einheilkappe und deren Austausch gegen einen Adapterkopf zur Verbindung mit dem Transferkörper,
- Fig. 27: das Aufsetzen des Transferkörpers,

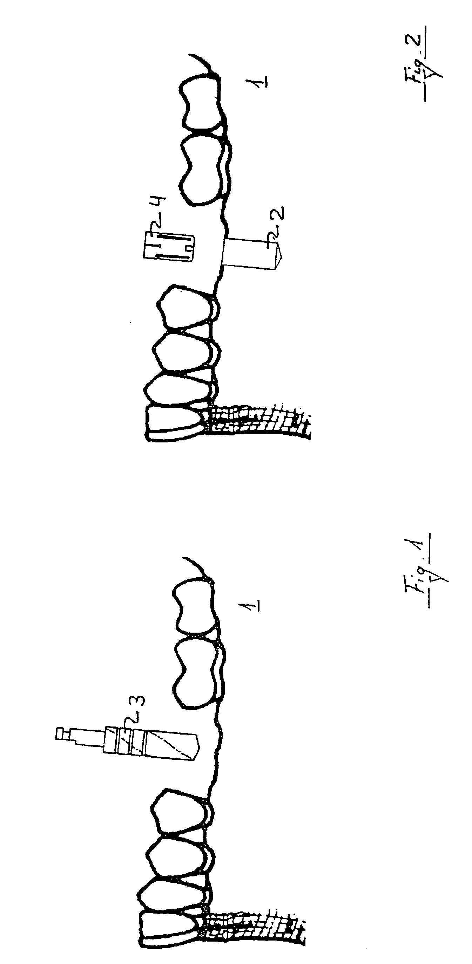

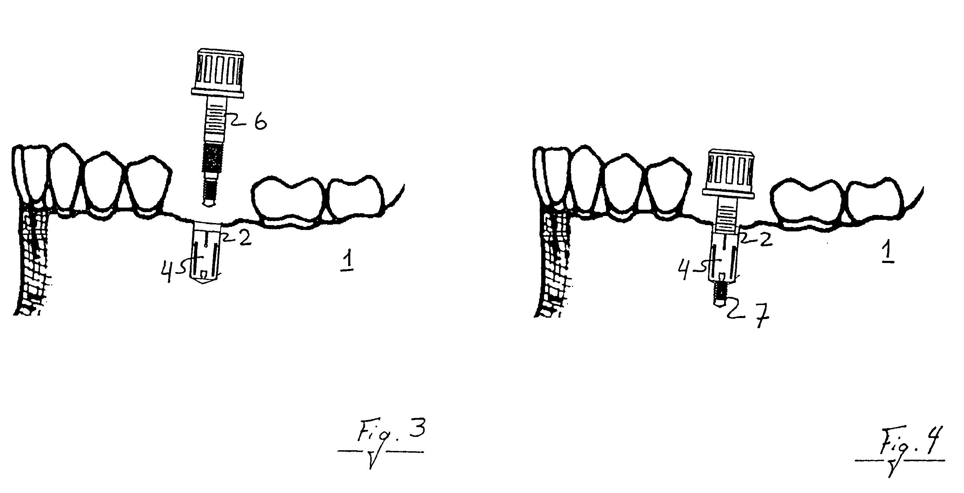

- Fig. 28 bis Fig. 32: ähnliche Schritte wie in Fig.1 bis Fig. 5 beim Setzen zweier lmplantate, darin
- Fig. 28: das Setzen der Pilotbohrungen in den Kieferknochen,
- Fig. 29: das Einsetzen der Hülsenteile in die Pilotbohrungen,
- Fig. 30: das Eindrehen eines Gewindevorschneiders in den Hülsenteil zur basalen Fortsetzung der Pilotbohrung,
- Fig. 31: die weitere Fortsetzung der Bohrung zur Aufnahme der die Hülsenteile basal überragenden Innenteile,
- Fig. 32: das Eindrehen der Innenteile der Implantatkörper,
- Fig. 33: die in den Kieferknochen eingesetzten Implantatkörper,
- Fig. 34 bis Fig. 37: die gegenüber dem obigen Verfahren alternativen Fortsetzungsschritte des Verfahrens, darin
- Fig. 34: das Aufschrauben von mit Gelenken versehenen Richtelementen,
- Fig. 35: deren Ausrichtung mittels der Parallelisierungsschablone,
- Fig. 36: die ausgerichteten und in dieser Stellung fixierten Adapter,
- Fig. 37: das Aufsetzen von Ankerteilen auf die Adapter,
- Fig. 38 bis Fig. 42: ein Verfahren zur Festlegung von Ankerteilen auf kugelförmigen Adapterköpfen, darin
- Fig. 38: ein Meistermodell zur Ausbildung einer Vollprothese mit zwei Adapterköpfen,
- Fig. 39: das Aufsetzen der Ankerteile auf die Adapterköpfe,
- Fig. 40: das Ausblocken der Verankerung mit Wachs od. dgl.,
- Fig. 41: den Aufbau der Prothese auf den zwei Implantatkörpern,
- Fig. 42: die übliche Fertigstellung der Prothese auf dem Meistermodell,

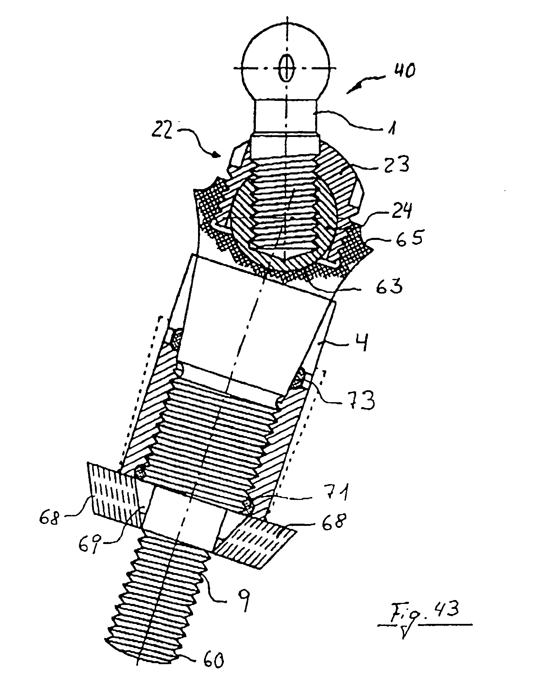

- Fig. 43: einen zweiteiligen lmplantatkörper mit in die koronale Ausnehmung eingesetztem und ausgerichtet durchbohrtem sowie mit daran anmontiertem und ausgerichtetem Ankerteil,

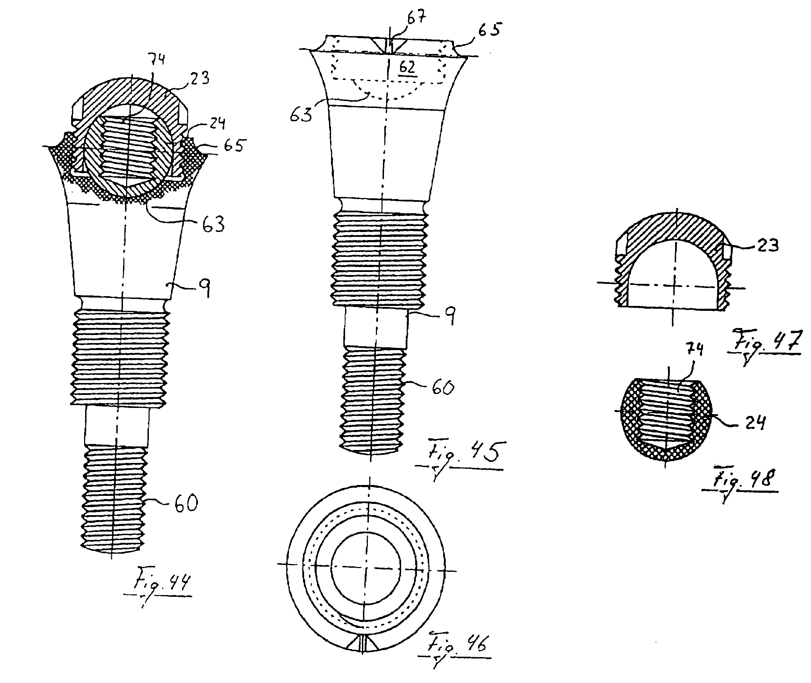

- Fig. 44: den Innenteil des lmplantatkörpers nach Fig. 43 mit in die koronale Ausnehmung eingesetztem Fixierungselement,
- Fig.45: eine ähnliche Ansicht wie Fig. 44 des inneren Implantatteils ohne Fixierungselement,

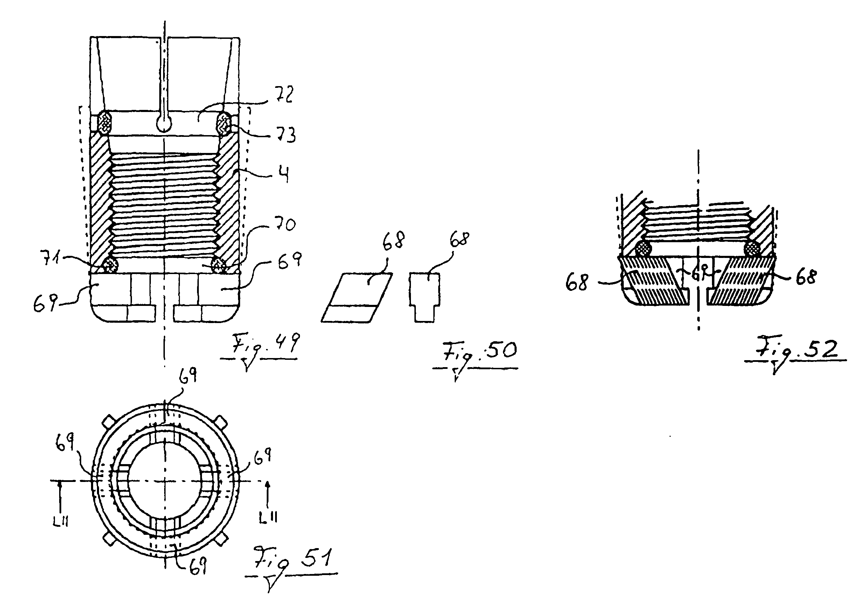

- Fig. 46: den inneren Implantatteil nach Fig. 45 in Draufsicht,
- Fig. 47: den Kappenteil des Fixierungselements im Querschnitt,

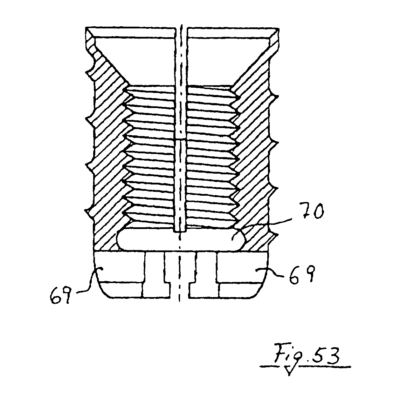

- Fig. 48: den Kugelteil des Fixierungselements im Querschnitt,
- Fig. 49: den Hülsenteil des zweiteiligen Implantatkörpers nach Fig. 43 in längsschnittlicher Ansicht,

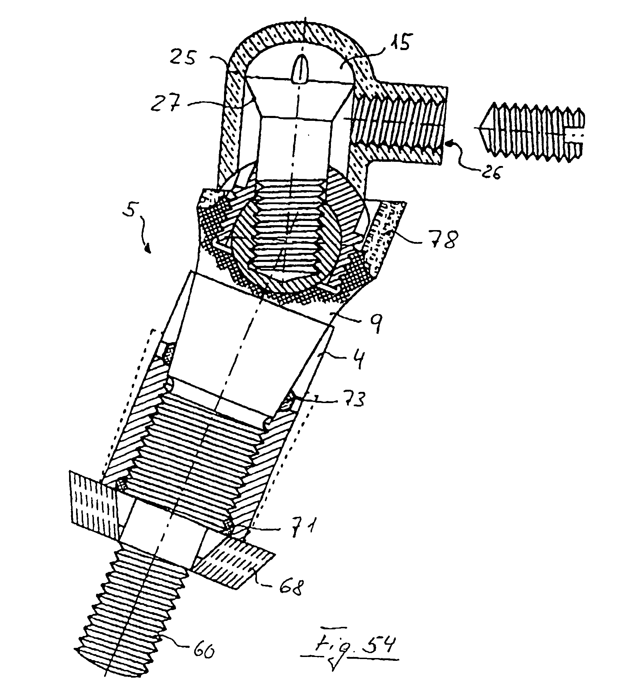

- Fig. 50: die radial ausschiebbaren Verankerungsteile in Seiten- und Frontansicht,
- Fig. 51: das Teil nach Fig. 49 in Draufsicht,

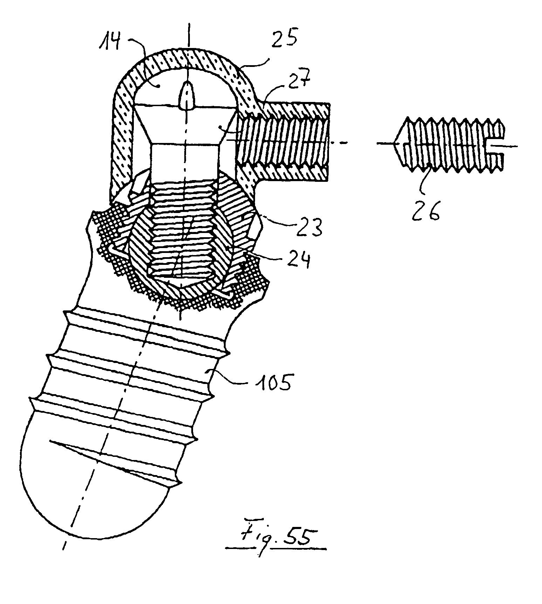

- Fig. 52: einen Schnitt entlang der Linie LII-LII in Fig. 51,
- Fig. 53: eine ähnliche Ansicht wie Fig. 49 eines alternativen Hülsenteils mit Außengewinde,

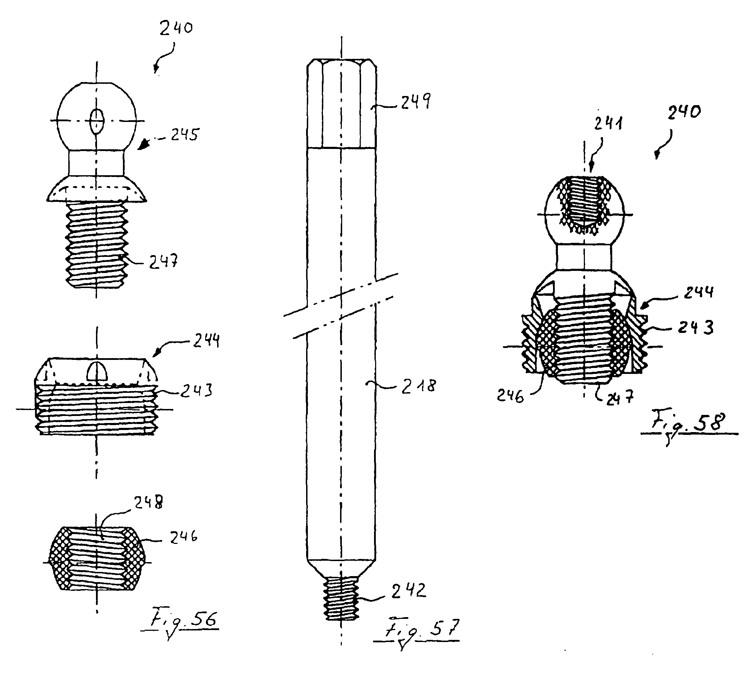

- Fig. 54: den Implantatkörper nach Fig. 43 mit auf den Ankerteil aufgesetztem Hülsenkörper,
- Fig. 55: eine ähnliche Ansicht wie Fig. 54 des Implantatkörpers nach Fig. 53,

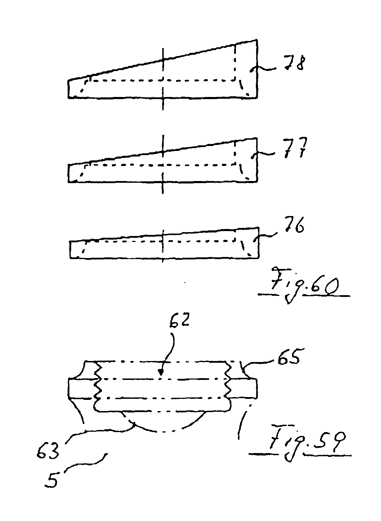

- Fig. 56: den Adapterkopf für das Verfahren nach Fig. 38 bis Fig. 42 in Explosionsdarstellung,
- Fig. 57: ein Richtelement zur Ausrichtung und Fixierung der Teile nach Fig. 56,

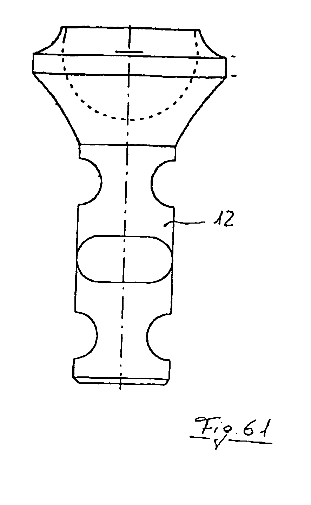

- Fig. 58: den ausgerichteten und fixierten Adapterkopf nach Fig. 56,
- Fig. 59: eine Detailansicht der Hohlkehle im koronalen Bereich des Implantatkörpers nach Fig. 43,

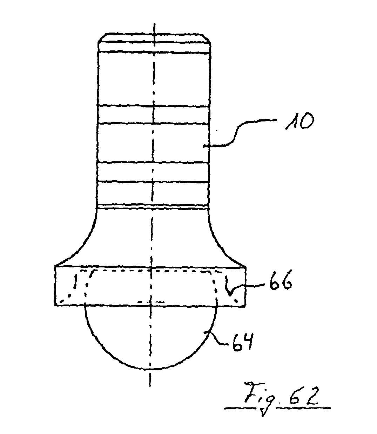

- Fig. 60: verschiedene keilförmige Ausgleichsringe für den Übergang zwischen Implantatkörper und Suprakonstruktion,
- Fig. 61: das Ersatzimplantat in Seitenansicht,

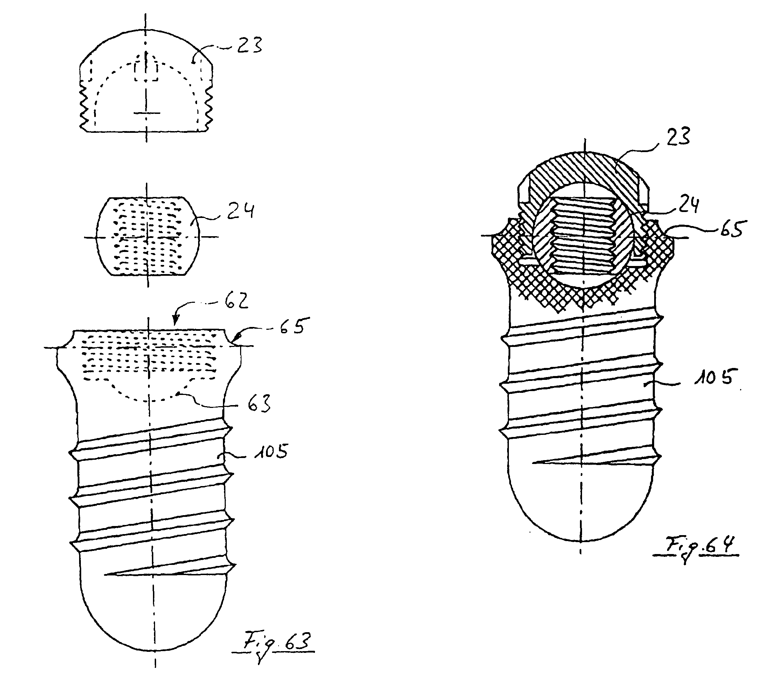

- Fig. 62: den Transferkörper in Seitenansicht,
- Fig. 63: einen einteiligen Implantatkörper mit Fixierungselement in Explosionsdarstellung,

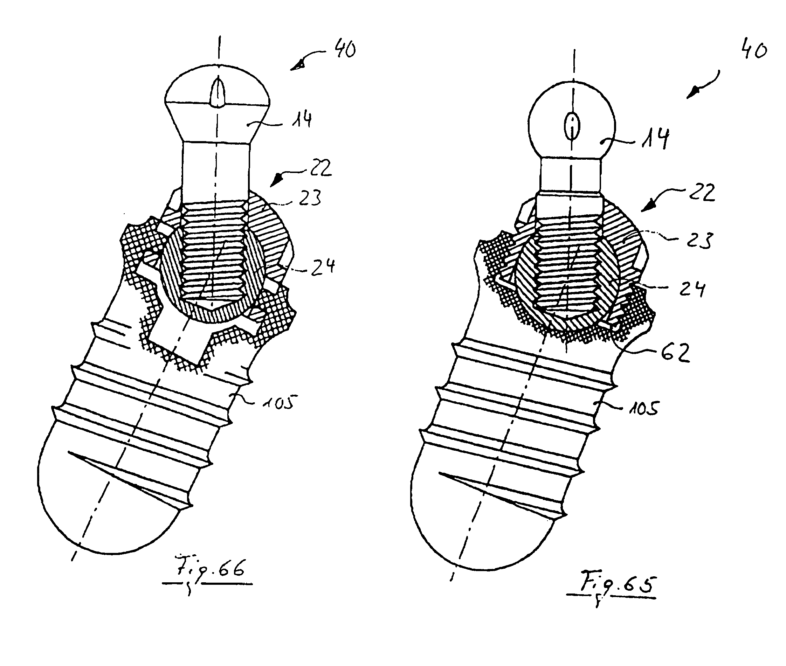

- Fig. 64: die Teile nach Fig. 63 in Verbindungsstellung,
- Fig. 65: eine ähnliche Ansicht wie Fig. 64 mit ausgerichtetem und fixiertem Ankerteil,
- Fig. 66: eine ähnliche Ansicht wie Fig. 65 mit einem über einen Bajonettverschluß festgelegten Fixierungselement.

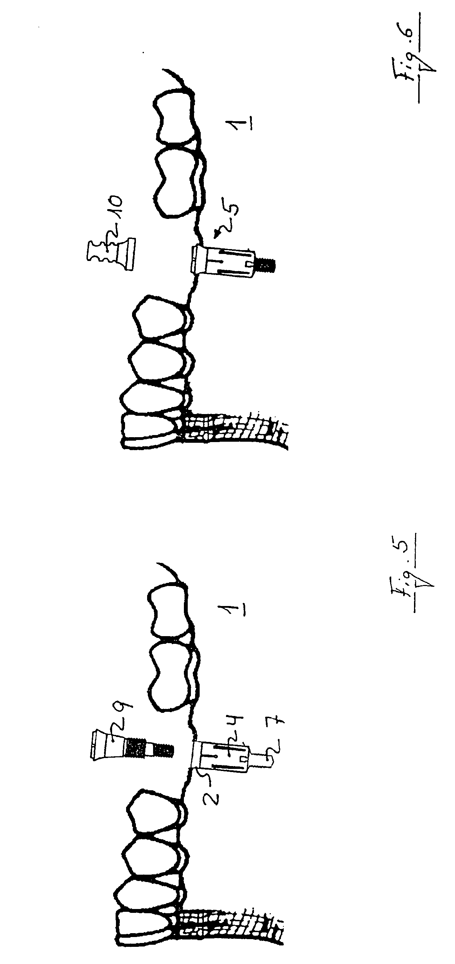

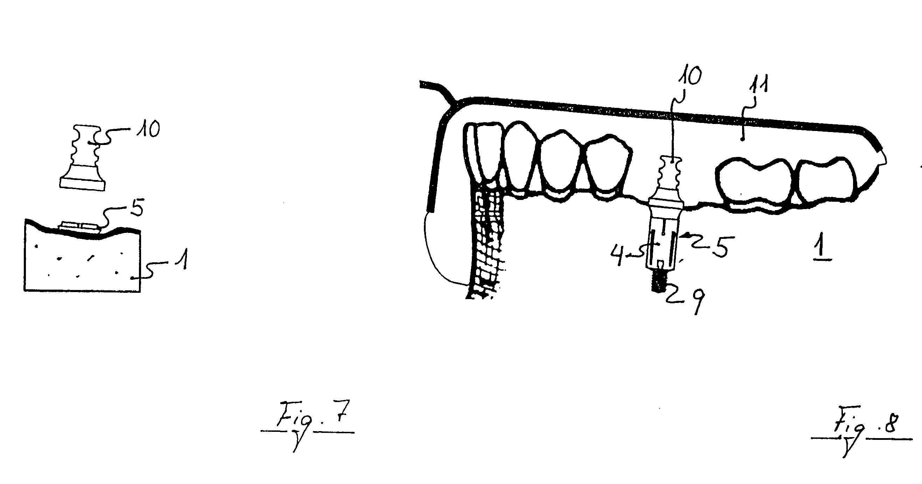

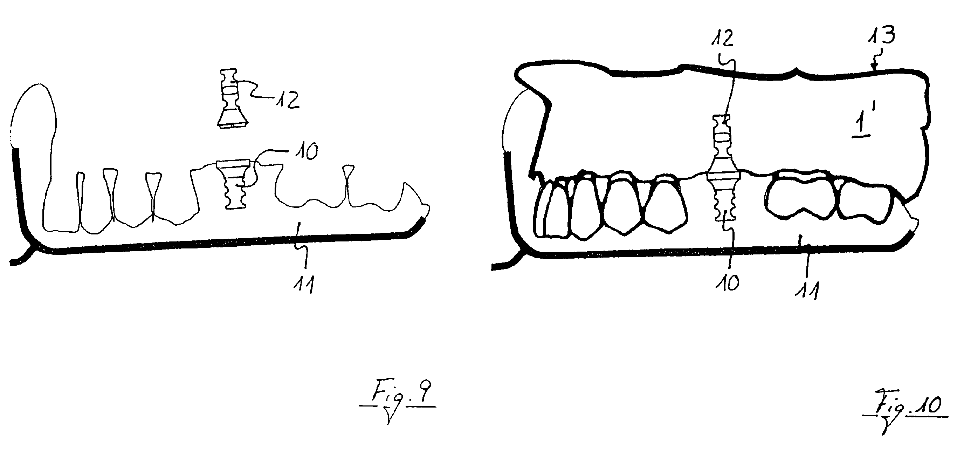

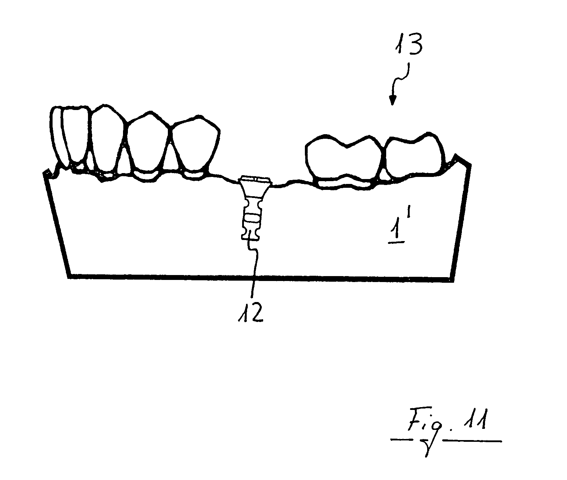

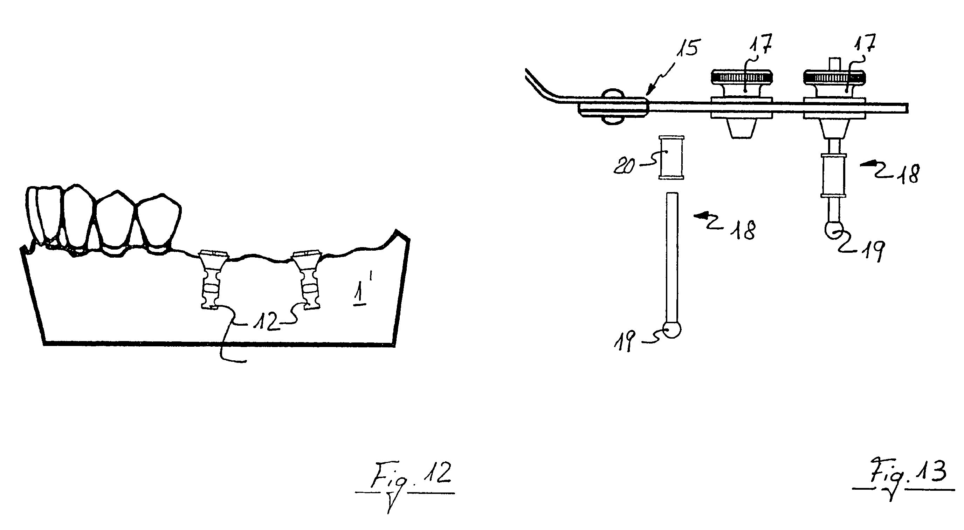

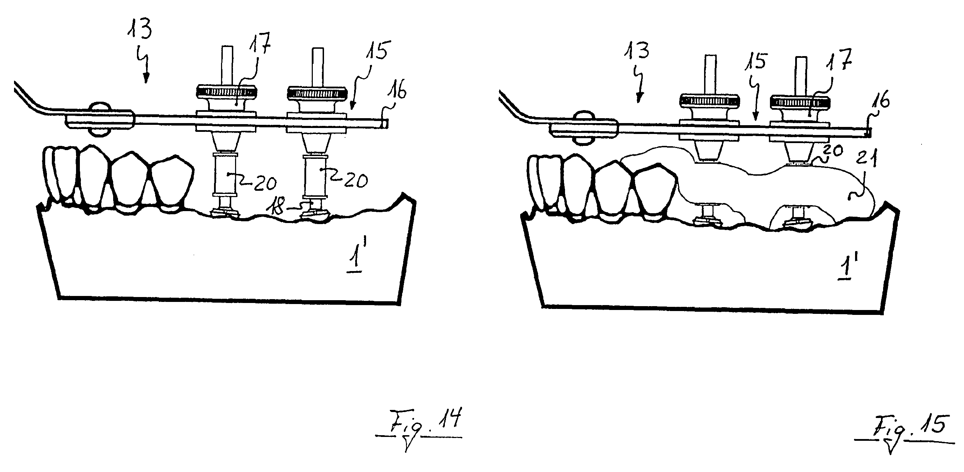

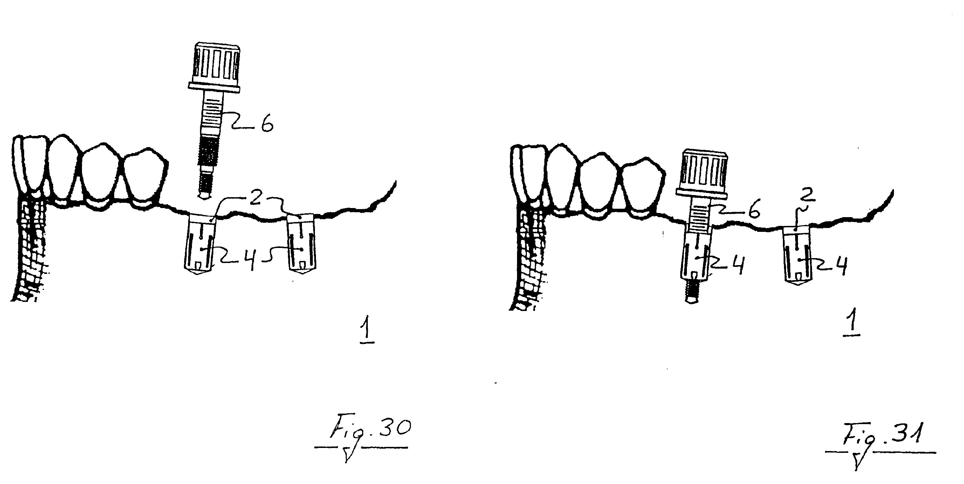

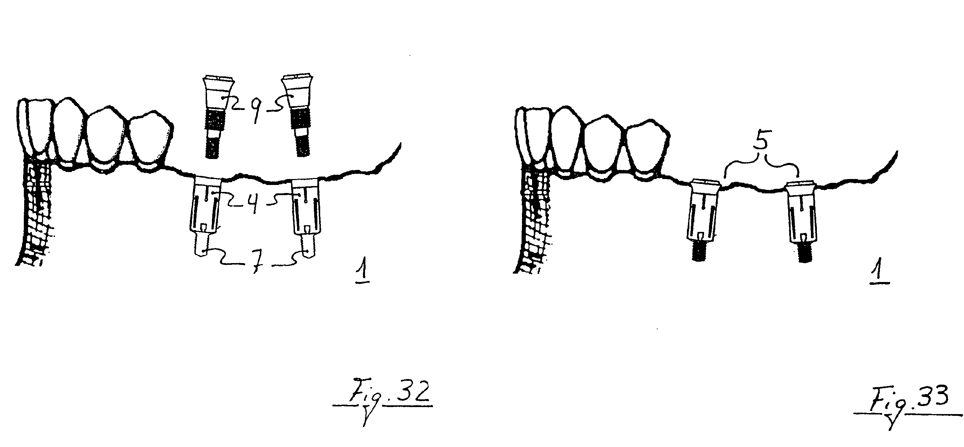

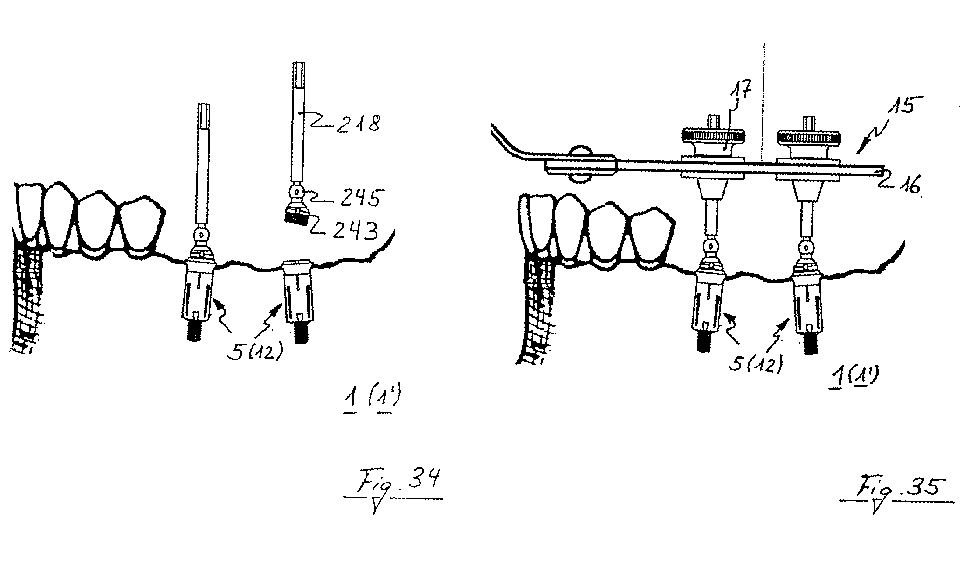

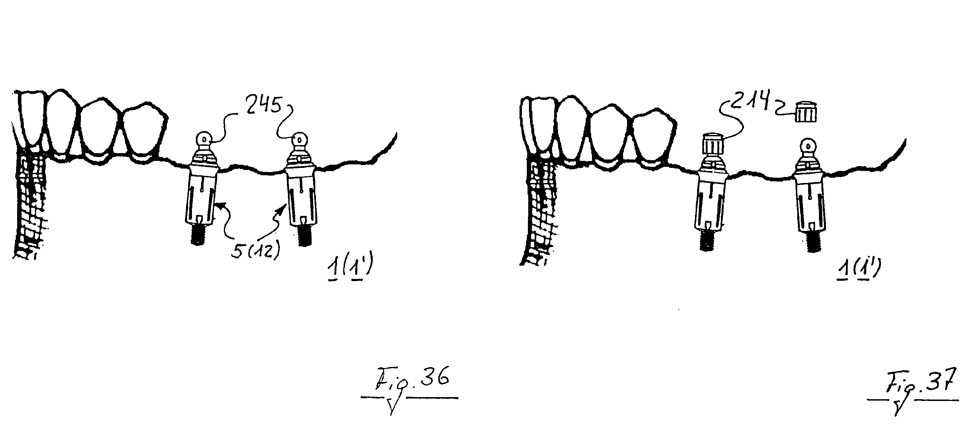

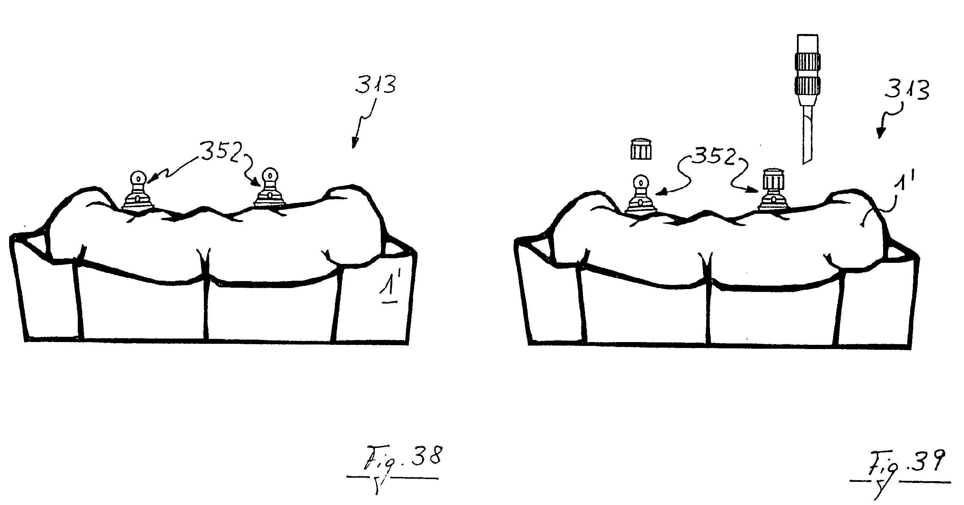

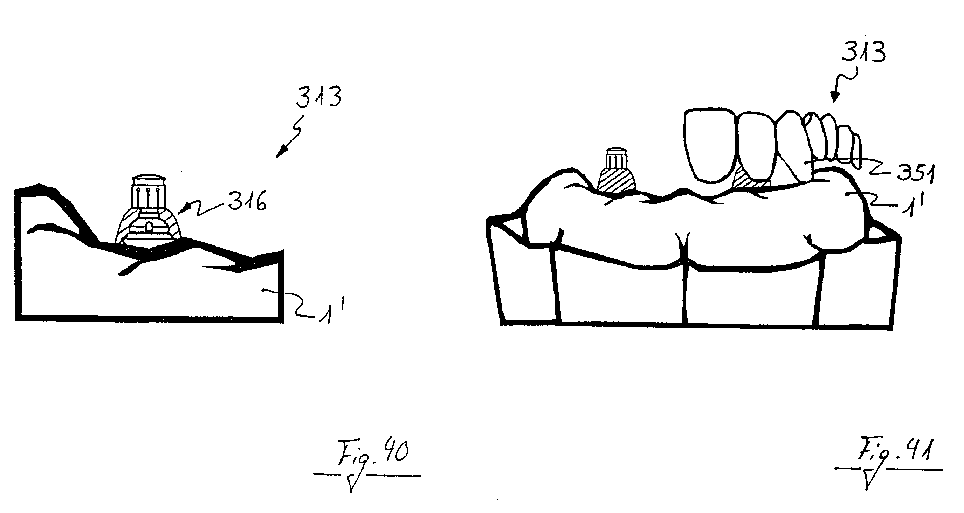

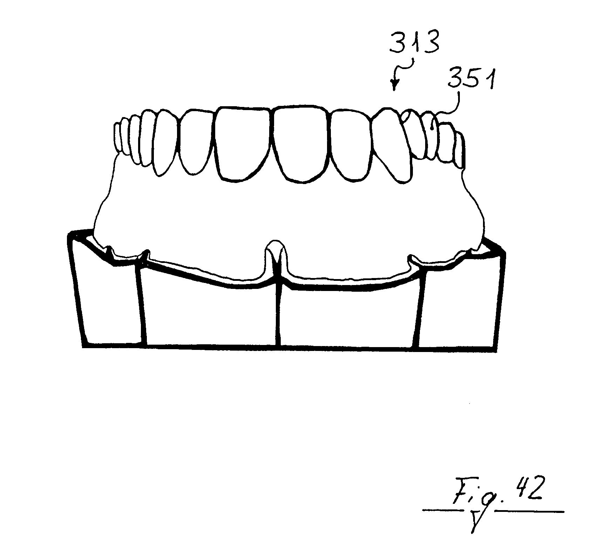

Nach dem erfindungsgemäßen Verfahren, das in einer ersten Ausbildung in den Figuren 1 bis 21 dargestellt ist, wird zum Aufbau einer Suprakonstruktion, beispielsweise eines einzelnen Implantats, einer Brücke oder einer Vollprothese, zunächst im Kieferknochen 1 an jeder Stelle, an der ein lmplantatkörper eingebracht werden soll, mittels eines Bohrers 3 eine Pilotbohrung 2 vorgenommen. Diese dient bei Verwendung eines zweiteiligen Implantatkörpers 5 zur Aufnahme von dessen Hülsenteil 4. Da der Hülsenteil 4 sich nur über einen Teil der axialen Länge des zweiteiligen Implantatkörpers 5 erstreckt, kommt die Pilotbohrung 2 ebenfalls mit einer geringen axialen Erstreckung aus. Die Gefahr, daß beim Bohren Blutgefäße verletzt werden oder der Bohrer in die Kieferhöhle eindringt, ist vermindert. Mittels eines Gewindevorschneiders 6 kann die Pilotbohrung 2 von Hand weiter basal vorangetrieben werden, um dadurch eine gegenüber der Pilotbohrung 2 querschnittsverminderte Fortsetzung 7 zu erreichen. Durch den Handbetrieb ist die Verletzungsgefahr hierbei ebenfalls gering. Nach Fertigstellung der Bohrung 2, 7 wird in ein Innengewinde 8 des primären Hülsenteils 4 der sekundäre Innenteil 9 eingeschraubt und der Implantatkörper 5 insgesamt im Kieferknochen 1 verankert.

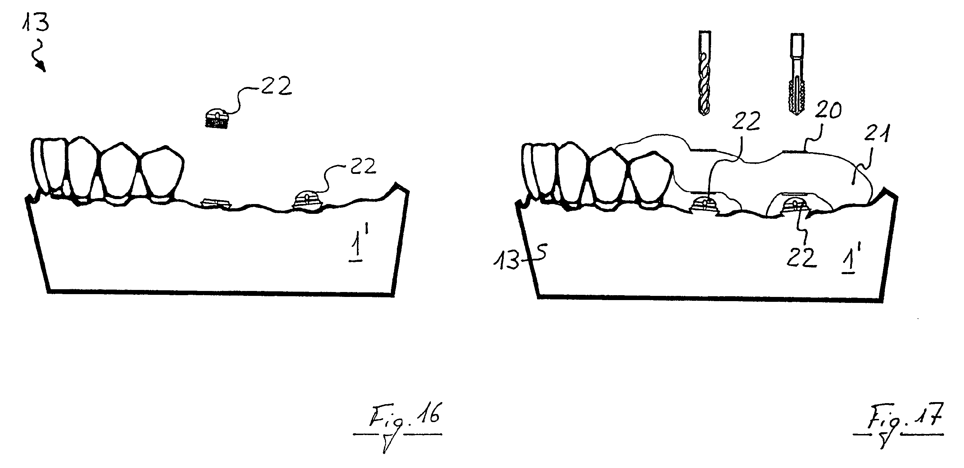

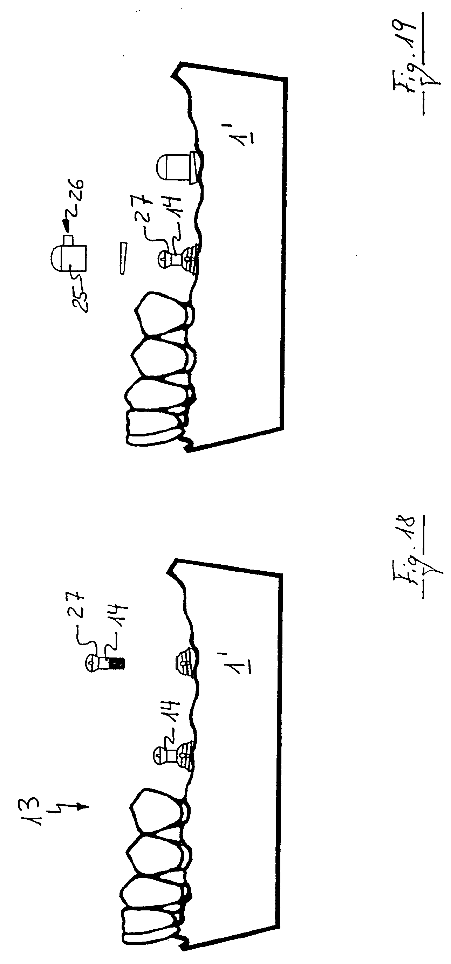

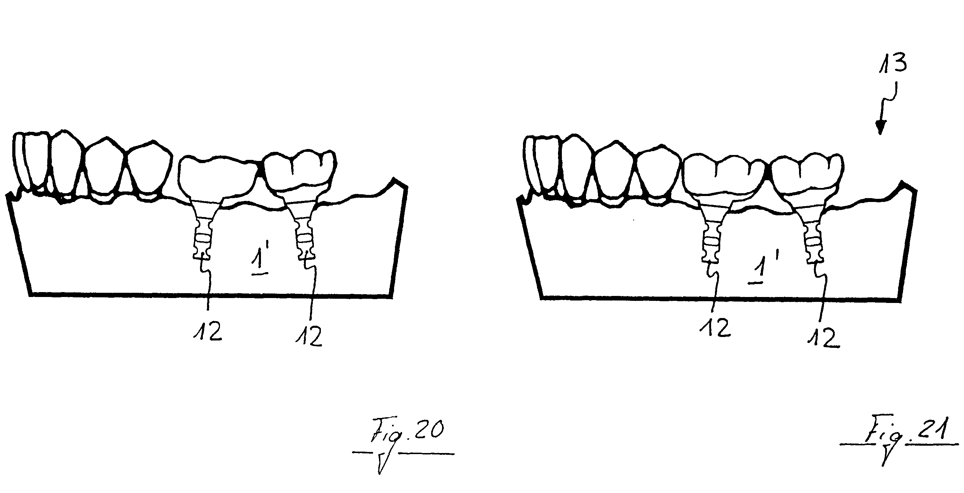

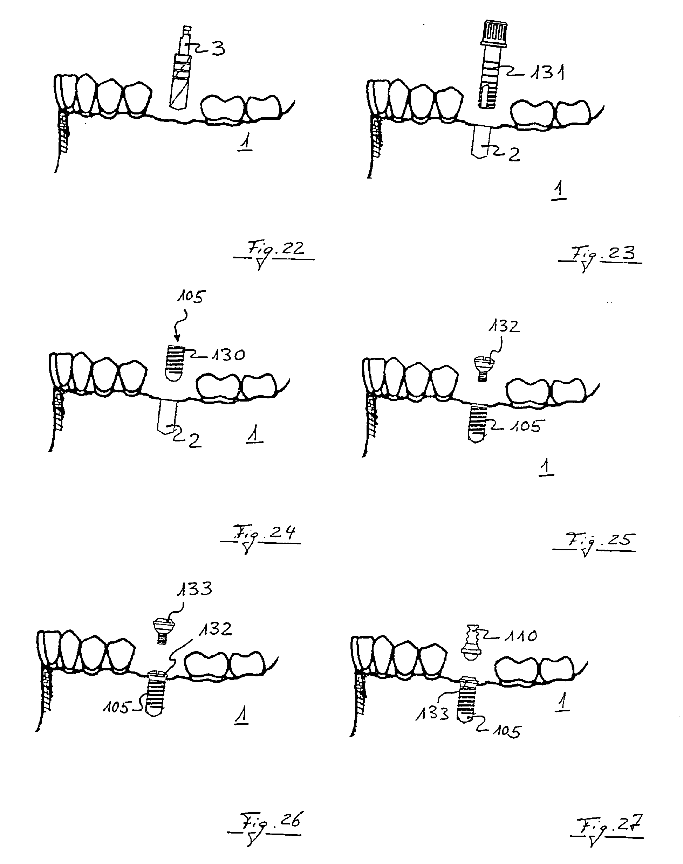

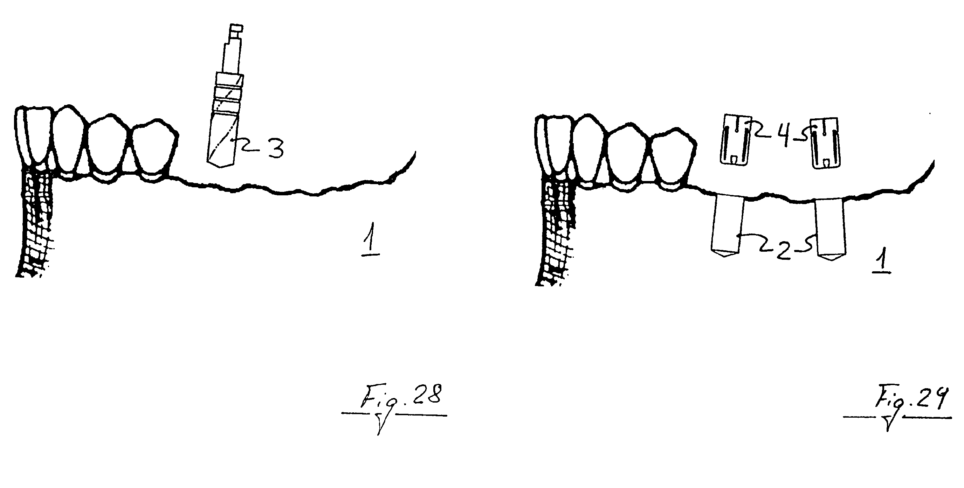

Unmittelbar auf das koronale Ende des Implantatkörpers 5 wird ein Transferkörper 10 aufgesetzt, dessen axiale Ausrichtung derjenigen des Implantatkörpers 5 im Kieferknochen 1 exakt folgt. Hierzu ist, wie unten noch im einzelnen beschrieben, der Transferkörper 10 formschlüssig auf den Implantatkörper 5 aufrastbar. Bei der anschließenden Entnahme eines Abdrucks (Fig. 8) verbleibt der Transferkörper 10 in der Abdruckmasse 11 und liefert so ein Bild der Ausrichtung und Eindringtiefe des Implantatkörpers 5 im Kieferknochen 1.

Zur Anfertigung des Meistermodells 13 wird auf den in der Abdruckmasse 11 gehaltenen Transferkörper 10 an Stelle des vorher mit diesem verbundenen Implantatkörpers 5 ein Ersatzimplantatkörper 12 aufgesetzt, der in gleicher Weise wie vorher der Implantatkörper 5 rastend mit dem Transferkörper 10 verbunden wird. Die Ausbildung des koronalen Randbereichs des Ersatzimplantatkörpers 12 entspricht derjenigen des Implantatkörpers 5, ebenso wie dessen Ausrichtung und Eindringtiefe in das Modell eines Kiefknochens 1' im Meistermodell 13 derjenigen des Implantatkörpers 5 im Kieferknochen 1 entspricht.

Da die Lage des eingebohrten Implantatkörpers 5 im Kieferknochen 1 in aller Regel von der Lotrechten abweicht, ist es erforderlich, den die Suprakonstruktion tragenden Ankerteil 14 gegenüber der axialen Lage des Implantatkörpers 5 hinsichtlich seines Winkels auszurichten und in ausgerichteter Stellung zu fixieren. Erfindungsgemäß findet dieses vollständig am Meistermodell statt; eine Übertragung auf den Patienten kann anschließend einfach vorgenommen werden. Zur Ausrichtung findet eine an sich bekannte Parallelisierungsschablone 15 Verwendung, die eine im wesentlichen dem Bogenverlauf des Kiefers folgende Schiene 16
umfaßt, auf der einzelne Halter 17 für Richtelemente 18 parallel zueinander fixiert werden können. Dann stehen die Richtelemente in einer gegenüber der Achse des Implantatkörpers 5 bzw. Ersatzimplantatkörpers 12 abgewinkelten Stellung.

Die Richtelemente 18 sind stiftförmig ausgebildet und weisen an ihrem der Parallelisierungsschablone 15 abgewandten Ende kugelförmige Ansätze 19 zum Eingriff in den koronalen Endbereich des Ersatzimplantatkörpers 12 auf. Zur Parallelstellung der Richtelemente 18 werden zunächst die kugelförmigen Ansätze 19 in Eingriff mit dem Ersatzimplantatkörper 12 gebracht, dann parallelgestellt und in dieser Stellung an der Schiene 16 fixiert. Dabei sind um die Richtelemente 18 Hülsen 20 angeordnet (Fig.14). In ausgerichteter Position der Richtelemente 18 wird um diese Hülsen 20 eine aushärtbare Masse 21, beispielsweise ein Autopolymerisat, angeordnet, die sich an den Hülsen 20, dem Kiefer 1 'und den übrigen Zähnen abstützt und die nach Herausdrehen der Richtelemente 18 die Hülsen 20 gegenüber dem Meistermodell 13 und bei Vorsehen mehrerer Ersatzimplantatkörper 12 auch gegeneinander in ausgerichteter Position hält. Nach Entfernen der Richtelemente 18 werden im einzelnen unten näher beschriebene Fixierungselemente 22, insbesondere solche aus Titan, auf die Ersatzimplantatkörper 12 aufgesetzt, die den Ankerteil 14 für die Suprakonstruktion in ausgerichteter Stellung halten sollen. Um dies zu ermöglichen, wird die ausgehärtete Masse 21 mit den darin gehaltenen Hülsen 20 auf die mit den Fixierungselementen 22 versehenen Ersatzimplantatkörper 12 aufgelegt und als Bohrschablone für ein gerichtetes Anbohren der Fixierungselemente 22 verwendet. Die Bohrung wird dabei durch die parallelisierten Hülsen 20 vorgenommen (Fig. 17), die einen Schlüssel für die jeweilige optimale Ausrichtung darstellen.

Das Fixierungselement 22, das den Ankerteil 14 halten soll, kann entweder einstückig ausgebildet sein, was das Einschneiden eines Gewindes nach Vornahme der gerichteten Bohrung erforderlich macht, oder es umfaßt besonders vorteilhaft einen Kappenteil 23, der in dem Ersatzimplantatkörper 12 gehalten werden kann und die gerichtete Durchbohrung erfährt, sowie einen i.w. kugelförmigen Teil 24, der unterhalb des Kappenteils 23 verschwenkbar ist und ein Konterglied für einen einzuschraubenden oder anders festzulegenden Ankerteil 14 ausbildet. Der i.w. kugelförmige Teil 24 kann dann industriell vorgefertigt werden und mit einem fertigen Innengewinde oder sonstigem Halterungsansatz versehen sein. Der Kappenteil 23 ist entweder in dem Innengewinde der Formausnehmung 62 gehalten oder über Federn gehalten, was einen Puffereffekt beim Kauen analog zur Zahnaufhängung über Sharpeysche Fasern bewirkt. Insgesamt stellt das Fixierungselement 22 mit dem Ankerteil 14 einen Adapter zur gerichteten Verbindung des Implantatkörpers 5 bzw. Ersatzimplantatkörpers 12 mit der Suprakonstruktion dar.

Im Ausführungsbeispiel wird der Ankerteil 14 in die an der Lage des Ersatzimplantatkörpers 12 ausgerichtete Bohrung des Fixierungselements 22 eingeschraubt. Deren Durchmesser entspricht dabei dem Schaftdurchmesser des Ankerteils 14. Nach dessen Festlegung ist eine gegeneinander unverrückbare Einheit von Implantatkörper 5, ein- oder mehrteiligem Fixierungselement 22 und Ankerteil 14 gebildet, wobei letztgenannte als Adapter 40 für eine Suprakonstruktion dienen. Der Ankerteil 14 stellt dabei ein Fundament für einen Hülsenkörper 25 dar, der diesen übergreift und mit einer seitlich einführbaren Madenschraube 26 unterhalb eines erweiterten Randes 27 des Ankerteils 14 halterbar ist. Die Schraube 26 ist aus optischen Gründen vorzugsweise von der lingualen Seite zugänglich. Die aufzubauende Krone oder Brücke 28 beläßt einen Durchgang, um mittels Herausdrehen der Schraube 26 die Suprakonstruktion wieder entfernen und umsetzen zu können, so daß die in Fig. 21 gezeigte fertige Brücke unschwer vom Meistermodell 13 auf den Patienten übertragen werden kann. Am Patienten kann je nach Wahl eine dauerhafte Zementierung erfolgen oder die Lösbarkeit -eventuell auch nur vorübergehend - beibehalten werden.
Die Verankerung kann sowohl für Einzelkronen als auch für lösbaren oder festen Zahnersatz stets in der gleichen Weise erfolgen. Damit ergibt sich gegenüber der bisherigen Vielzahl von unterschiedlichen Verankerungssystemen eine erhebliche Vereinfachung.

Bei einer alternativen Verfahrensausbildung gemäß den Figuren 22 bis 27 findet ein einteiliger Implantatkörper 105 Verwendung, der ein Außengewinde 130 aufweist. Nach Setzen der Pilotbohrung 2 in den Kieferknochen 1 wird über einen Gewindevorschneider 131 die Bohrung 2 mit einem Innengewinde versehen, an dem sich das Außengewinde 130 des Implantatkörpers 105 abstützen kann. Dieses kann wahlweise auch selbstschneidend ausgebildet sein. In Fig. 25 ist die mögliche Verwendung einer Einheilkappe 132 dargestellt, die in dem Implantatkörper 105 über ein darin befindliches Innengewinde verankert werden kann. Die Einheilkappe 132 kann nach Ablauf der Einheilzeit gegen einen Adapterkopf 133 ausgetauscht werden, der in gleicher Weise wie oben mit einem aufrastenden Transferkörper 110 (Fig. 27) verbindbar ist, so daß die weiteren Verfahrensschritte wie oben in Fig.8 ff. dargestellt ablaufen können.

In den Figuren 28 bis 37 ist ein alternatives Verfahren dargestellt, daß zur Ausrichtung ohne die Vornahme von Bohrungen in ein Fixierungselement auskommt. Die Verfahrensschritte nach den Figuren 28 bis 33 entsprechen dabei zunächst den schon in Fig. 1 bis Fig. 5 gezeigten: Es wird mittels eines Bohrers 3 eine der Anzahl der zu setzenden Implantate entsprechende Anzahl von Pilotbohrungen 2 vorgenommen, in diese werden die Hülsenteile 4 der zweiteiligen Implantatkörper 5 eingesetzt. Über einen Handbohrer oder ähnlichen Gewindevorschneider 6 wird eine basale Fortsetzung 7 der Bohrung vorangetrieben, anschließend werden die sekundären Innenteile 9 der Implantatkörper 5 in die Hülsenteile 4 und den Kieferknochen 1 eingedreht.
Die Ausrichtung, die in den Figuren 34 bis 37 dargestellt ist, kann sowohl, wie oben beschrieben, am Meistermodell stattfinden als auch unmittelbar im Mund des Patienten vorgenommen werden. Dabei werden auf den Implantatkörper 5 bzw. den Ersatzimplantatkörper 12 Richtelemente 218 aufgesetzt, die einenends mit einem Adapter 240 formschlüssig lösbar verbunden sind. Hierfür weist der Adapter 240 eine mit einem Innengewinde versehene Bohrung 241 auf, in die ein komplementäres Endstück 242 des Richtelements eingreifen kann (Fig. 56 bis Fig. 58). Der Adapter 240 ist mehrteilig ausgebildet und enthält einen in einem mit einem Außengewinde 243 versehenen Ringkörper 244 halterbaren Schwenkkörper 245. Dieser weist einen in einem Kugelteil 246 gekonterten Schaft 247 auf. Das Kugelteil 246 enthält hierfür ein Innengewinde 248, das den Schaft 247 aufnimmt. Der Ringkörper 244 weist einen sich nach außen hin verjüngenden Querschnitt auf, an den sich das darin zu haltende Kugelteil 246 anlegt, ohne vollständig hindurchtreten zu können. Es erfüllt damit die Funktion einer Kontermutter für den Schwenkkörper 245, ist jedoch aufgrund seiner i.w. kugelförmigen Außengestalt in der Lage, die Konterfunktion in jeder in Frage kommenden Winkelstellung des Schwenkkörpers 245 vorzunehmen.

Vor dem Aufsetzen der Adapter 240 auf den Implantatkörper 5 oder Ersatzimplantatkörper 12 sind die Richtelemente 218 mit den Schwenkkörpern 245 verschraubt. Diese sind jedoch in dem jeweiligen Kugelteil 246 nur lose gekontert, so daß Schwenkkörper 245 und Kugelteil 246 noch relativ zueinander schwenkbar sind.
Zur Ausrichtung werden zunächst die Ringkörper 243 in eine koronale Ausnehmung des Implantatkörpers 5 bzw. Ersatzimplantatkörpers 12 eingeschraubt. Mit der Parallelisierungsschablone 15 wird die Parallelstellung der Richtelemente 218 mit den daran formschlüssig anschließenden Schwenkkörpern 245 wie oben eingestellt. Anschließend wird zur Fixierung der Adapter 240 in dieser Winkelstellung an dem dem Adapter abgewandten Ende des Richtelements 218 ein Drehwerkzeug angesetzt, das die Festziehung des Schafts 247 in dem konternden Kugelteil 246 bewirkt. Hierfür weist das Richtelement 218 einen Ansatz 249 für ein Drehwerkzeug auf. Das Gewinde, mit dem das Richtelement 218 in dem Schwenkkörper 245 gehalten wird, und dasjenige, mit dem der Schaft 247 in dem Kugelteil 246 gehalten wird, sind gegenläufig, wodurch ein Fixieren der Schwenkposition durch Drehen des Richtelements 218 nicht zu dessen Lösung vom Schwenkkörper 245 führt. Durch das Drehen des Richtelements 218 wird das konternde Kugelteil 246 in den sich verjüngenden Innenraum 250 des Ringkörpers 243 hineingezogen, so daß Ringkörper 243 und Schwenkkörper 245 in ihrer ausgerichteten Schwenkstellung gegeneinander gezogen und fixiert werden.

Um auf einem mit kugelförmigen Adapterköpfen 352 versehenen Meistermodell 313 eine Prothese, beispielsweise eine Vollprothese 351, aufbauen zu können (Fig. 38 bis Fig. 42), werden auf die Adapterköpfe 352 als Ankerteile 214, 314 Hülsenkörper aufgesetzt, die nach Art eines Schnappverschlusses auf diesen festgelegt werden. Für einen unverrückbaren Halt wird der Raum unterhalb der Ankerteile 314 in deren Parallelstellung mit Wachs 316 oder dergleichen ausgeblockt, so daß eine Bewegung auf dem Adapterkopf 352 nicht mehr möglich ist. Auf derartigen Ankerteilen 314 kann in an sich bekannter Weise die Prothese aufgebaut werden, ehe sie vom Meistermodell 313 auf die im Kieferknochen ausgerichteten Adapterköpfe übertragen wird. Damit ist eine Suprakonstruktion mit einer Vielzahl von Zähnen auf lediglich zwei Implantatkörpern aufgebaut worden.

In Fig. 43 ist ein zweiteiliger lmplantatkörper 5 dargestellt, der bei einem erfindungsgemäßen Verfahren, aber auch unabhängig hiervon Verwendung finden kann. Der Implantatkörper 5 weist einen in eine Bohrung 2 im Kieferknochen 1 einsetzbaren Hülsenteil 4 und einen darin abstützbaren Innenteil 9 auf, der in Verbindungsstellung der Teile basal über den Hülsenteil 4 hinausragt und über ein eigenes Gewinde 60 im Kieferknochen 1 mit verankert ist. In seinem koronalen Endbereich weist der Implantatkörper 5 einen Anschluß 61 zum formschlüssigen Aufrasten eines Transferkörpers 10 auf. Dieser Anschluß 61 umfaßt eine axiale zylindrische Formausnehmung 62, die mit einem Innengewinde versehen ist und basal eine kugeltaschenförmige Fortsetzung 63 aufweist.

Bei Aufrastung eines Transferkörpers 10 gemäß Fig. 62 greift dessen kugelförmiger Vorsprung 64 in die Kugeltasche 63 der Formausnehmung 62 ein und ist von zumindest einem Gewindegang des Innengewindes der Formausnehmung 62 rastend hintergriffen. Hierzu ist der kugelförmige Vorsprung 64 in Verbindungsstellung zu mehr als der Hälfte in der Formausnehmung 62 aufgenommen. Der Transferkörper 10 stützt sich hierbei auf einem umlaufenden Randbereich 65 mit einem komplementären Kragen 66 ab. Der Randbereich 65 ist dabei als Hohlkehle ausgebildet, was hinsichtlich der auftretenden Drücke besonders günstig ist; entsprechend ist der Kragen 66 ringförmig ausgewölbt. Zusätzlich sind die Teile gegeneinander verdrehgesichert, wozu am Implantatkörper 5 eine Kerbe 67 und am Transferkörper 10 ein darin eingreifender Vorsprung bzw. umgekehrt ausgebildet ist. Damit ist ein durch die Hohlkehle 65 einfach zu justierendes Aufrasten der Transferkörpers 10 gewährleistet, durch die Verdrehsicherung ist eine zuverlässige Übertragung der Lage des Implantatkörpers 5 im Kieferknochen 1 auf das Meistermodell 13 unterstützt.

Der lmplantatkörper 5 weist weiterhin im basalen Endbereich des Hülsenteils 4 seitlich in den Knochen ausschiebbare Verankerungsteile 68 auf (Fig. 43, Fig. 49-52). Diese sind als Keile ausgebildet und haben an ihrer der zentralen Achse des Implantatkörpers 5 zugewandten Seite Schrägflächen, so daß sie durch axialen Vortrieb des sekundären Innnenteils 9 radial auswärts bewegt werden und damit in den Knochen eindringen, um den Implantatkörper 5 zu halten. Die Keile 68 sind in Führungsschienen 69 gehalten, so daß der Freiheitsgrad ihrer Bewegung auf die radiale Verschiebung beschränkt ist. Die Zahl der Verankerungsteile 68 kann je nach Einsatzzweck variieren: Im Frontzahnbereich kann es empfehlenswert sein, nur zwei gegenüberliegende Keile 68 anzuordnen, die sich in distal-mesialer Ausrichtung im Kiefer erstrecken, um hinreichend Knochensubstanz vorzufinden. Im Backenzahnbereich kommt zusätzlich oder alternativ auch eine Verankerung in lingual-bukkaler Richtung in Betracht. Auch eine Ausführung mit etwa drei Keilen 68 ist möglich. Die verwendete Anzahl wird je nach der Form der von der Zahnwurzel hinterlassenen Kavität gewählt werden.

Der Implantatkörper 5 kann zusätzlich dadurch verankert werden, daß der Hülsenteil 4 in seinem koronalen Bereich aufspreizbar ist (in Fig. 49 gestrichelt angedeutet). Alternativ kann auch ein Außengewinde an dem Hülsenteil 4 vorgesehen sein (Fig. 53).
Zur Abdichtung zwischen dem Knochen und dem Implantatkörper 5 ist im basalen Bereich des Hülsenteils 4 eine Ringnut 70 vorgesehen, in die ein Abdichtungsring 71 eingelegt ist. Dieser liegt zwischen dem Hülsenteil 4 und dem Innenteil 9, so daß über das Gewinde einwandernde Verschmutzungen eine Barriere vorfinden. Ein weiterer Abdichtungsring 73 ist in einer koronalen Ringnut 72 des Hülsenteils 4 vorgesehen. Damit ist der die Verankerungsteile 68 aufnehmende Bereich vollständig von dem Gewindebereich abgedichtet, eine Verjauchung wie bei vollständig aufspreizenden Implantatkörpern ist damit vermieden.

Bei Verbindung des Implantatkörpers 5 mit einem Adapter 40 (Fig. 43) für eine Suprakonstruktion ist dieser über ein Fixierungselement 22 gehalten, das in dem Innengewinde der zylindrischen Formausnehmung 62 gehalten ist. Alternativ kommt auch ein Bajonettverschluß, eine Feder od. dgl. in Frage. Das Fixierungselement 22 ist zweiteilig ausgebildet und umfaßt einen i. w. kugelförmigen Teil 24, der als Konterglied dient und hierfür eine mit einem Innengewinde versehene Sackbohrung 74 aufweist. Der Kappenteil 23 ist in dem Innengewinde der Formausnehmung 62 gehalten und bildet innenseitig einen an den von diesem umfaßten Kugelteil 24 angepaßten Raum aus, so daß der Kugelteil 24 unterhalb des Kappenteils 23 in beliebiger Schwenkstellung liegen kann und durch Festdrehen des Kappenteils 23 in dieser Stellung durch Pressung fixiert wird. Der Kugelteil 24 ist weiterhin bereichsweise in der Kugeltasche 63 der Formausnehmung 62 aufgenommen, die den Raum unterhalb des Kappenteils 23 fortsetzt.
Nach Vornahme der gerichteten Bohrung in den Kappenteil 23 wird durch diese der Ankerteil 14, der als Bolzen zum Aufbau eines Brückenkopfes dient, eingesetzt und in dem Kugelteil 24 gekontert. Durch Festdrehen des Kappenteils 23 wird dieses gleichzeitig in der Formausnehmung 62 fest gehalten. Der Ankerteil 14 weist in seinem dem Kugelteil 24 abgewandten Endbereich eine Querschnittsvergrößerung 27 auf. Ein mit der Suprakonstruktion unlösbar verbundener Hülsenkörper 25 ist daran mittels einer seitlich eindrehbaren Madenschraube 26 formschlüssig sicherbar. Diese untergreift die Querschnittserweiterung 27, wodurch die formschlüssige Sicherung entsteht.
Um eine spielfreie Festlegung zu erreichen, ist ein Sortiment von Ausgleichsringen 76, 77, 78 mit verschiedener Neigung vorgesehen, die im Querschnitt keilförmig sind und einerseits eine Abdichtung zwischen dem koronalen Rand des zwei- oder einteiligen Implantatkörpers 5, 105 und dem Hülsenkörper 25 sowie andererseits eine Pressung bewirken. Der Hülsenkörper 25 erfährt dadurch eine vom Implantat weg gerichtete Kraft, der die sich an der schiefen Ebene der Querschnittserweiterung 27 abstützende Madenschraube 26 entgegenwirkt.

In Fig. 61 ist der im Meistermodell sitzende Ersatzimplantatkörper 12 dargestellt, der dort die Lage und Eindringtiefe des Implantatkörpers 5 wiedergibt und hinsichtlich seiner Verrastungsmöglichkeiten mit dem Transferkörper 10 die gleiche Ausbildung wie der Implantatkörper 5 aufweist.
In den Figuren 63 bis 65 ist die prinzipiell gleiche Anordnung des Adapters 40 auf einem einteiligen lmplantatkörper 105 dargestellt. In Fig. 66 ist ein Bajonettverschluß zur Halterung des Adapters 40 anstelle des Innengewindes in der Formausnehmung 62 gezeigt.
Die verwendeten Teile bestehen besonders vorteilhaft aus Titan, das sowohl hinsichtlich seiner mechanischen Eigenschaften als auch hinsichtlich seiner Verträglichkeit hervortritt.

## Patentansprüche

1. Verfahren zum Aufbau einer prothetischen Suprakonstruktion auf wenigstens einem in einem Kieferknochen angebrachten Implantatkörper,
bei dem der Implantatkörper mit einem Adapter verbunden wird, dessen den Suprakonstruktionsteil tragender Ankerteil eine auf den Implantatkörper abgestimmte Ausrichtung erfährt,
**dadurch gekennzeichnet,**
**dass** auf den Implantatkörper ein Transferkörper aufgesetzt wird,
und unter dessen Einschluss ein Abdruck abgenommen wird,
dann auf den Transferkörper ein Ersatzimplantatkörper aufgesetzt wird,
und ein diesen einschließendes Meistermodell angefertigt wird,
dann auf dem Meistermodell nach Ausrichtung des Ankerteils des Adapters der Suprakonstruktionsteil aufgebaut wird,
wobei zur Ausrichtung des Ankerteils eine Parallelisierungsschablone verwendet wird, die über parallel und gegenüber der Achse des Implantatkörpers gewinkelt einstellbare Richtelemente verfügt
und wobei mit Hilfe der Parallelisierungsschablone eine Bohrschablone erstellt wird, mittels der eine gerichtete Bohrung in einen Adapter für die Suprakonstruktion vorgenommen wird, wobei durch die Richtung der Bohrung die Ausrichtung der Suprakonstruktion festgelegt ist.

2. Verfahren nach Anspruch 1, **dadurch gekennzeichnet, dass** die Richtelemente im Wesentlichen stiftförmig ausgebildet sind und an einem Ende über zumindest bereichsweise kugelförmige Ansätze in den Implantatkörper eingesetzt werden.

3. Verfahren nach einem der Ansprüche 1 oder 2, **dadurch gekennzeichnet, dass** zur Erstellung der Bohrschablone ein Richtelement mit jeweils einer Hülse umgeben wird und um diese in ausgerichteter Position des Richtelementes eine aushärtbare Masse angeordnet wird, die nach Entfernung der Richtelemente die Hülse(n) gegenüber dem Modell und gegebenenfalls gegenüber einander in ausgerichteter Position hält.

4. Verfahren nach Anspruch 3, **dadurch gekennzeichnet, dass** nach Aushärtung der verwendeten Masse diese mit der oder den eingebetteten Hülse(n) eine Bohrschablone zur gerichteten Durchbohrung eines Fixierungselementes für die Suprakonstruktion bildet und die Bohrung(en) durch die Hülse(n) vorgenommen wird oder werden.

5. Verfahren nach Anspruch 4, **dadurch gekennzeichnet, dass** die Bohrung in ein Fixierungselement vorgenommen wird, das einen kugelförmigen Teil und einen diesen zumindest bereichsweise übergreifenden und an dem koronalen Ende des Implantatkörpers festlegbaren Kappenteil umfasst, wobei zumindest der Kappenteil von der gerichteten Bohrung durchsetzt wird.

6. Verfahren nach Anspruch 1, **dadurch gekennzeichnet, dass** die in dem Meistermodell angeordneten Ersatzimplantatkörper zunächst mit einem formschlüssig auf diese aufsetzbaren Adapter verbunden werden, wobei zur Ausrichtung die kugelgelenkig miteinander verbundenen Teile des Adapters gegeneinander verschwenkt und in einer eingestellten Schwenkposition
fixiert werden.

7. Verfahren nach Anspruch 6, **dadurch gekennzeichnet, dass** in dem schwenkbaren Teil des Adapters eine mit einem Gewinde versehene Bohrung zur Aufnahme eines Richtelementes vorgesehen ist und dass mittels Drehung des Richtelementes in dem Gewinde eine Fixierung des Kugelgelenks in der eingestellten Schwenkposition vorgenommen wird.

8. Verfahren nach Anspruch 1, **dadurch gekennzeichnet, dass** die in dem Meistermodell angeordneten Ersatzimplantatkörper zunächst mit einem formschlüssig auf diese aufsetzbaren Adapter verbunden werden, der einen zumindest bereichsweise kugelförmigen Kopf aufweist, auf den ein gegenüber diesem schwenkbarer Hülsenkörper aufgesetzt und als Fixierungselement in einer gerichteten Schwenkstellung gegenüber dem Kugelkopf festgelegt wird.

9. Verfahren nach Anspruch 8, **dadurch gekennzeichnet, dass** zur Festlegung des Fixierungselementes eine aushärtbare Masse, insbesondere ein Wachs, Verwendung findet, dass das Fixierungselement auf dem Kugelkopf des Adapters in der ausgerichteten Stellung hält.

## Claims

1. Method for assembly of a prosthetic superstructure on an implant body fastened into at least one jaw bone, wherein the implant body is connected to an adaptor whose anchor portion bearing the superstructure portion undergoes an alignment matched to the implant body, **characterised in that** a transfer body is placed on the implant body and a impression is taken including said transfer body, then a substitute implant body is placed onto the transfer body, and a master pattern including said substitute implant body is produced, then the superstructure portion is assembled on the master pattern once the anchor portion of the adaptor has been aligned, wherein for alignment of the anchor portion, a parallelising template is used, said template having aligning elements which are parallel and angled relative to the axis of the implant body and wherein, with the aid of the parallelising template, a boring template is made, by means of which a directed bore is made in an adaptor for the superstructure, whereby the alignment of the superstructure is determined by the orientation of the bore.

2. Method according to claim 1, **characterised in that** the aligning elements are formed substantially pin-shaped and at one end are inserted into the implant body by means of at least partially spherically shaped extensions.

3. Method according to one of the claims 1 or 2, **characterised in that**, in order to create the boring template, an aligning element is surrounded in each case with a sleeve and a settable mass is arranged around said sleeve in the aligned position of the aligning element, said mass holding the sleeve(s) in the aligned position relative to the pattern after removal of the aligning elements and possibly relative to each other.

4. Method according to claim 3, **characterised in that**, following hardening of the mass used, together with the embedded sleeve(s), it forms a boring template for directed boring through of a fixing element for the superstructure and the bore(s) is/are made through the sleeve(s).

5. Method according to claim 4, **characterised in that** the bore is made in a fixing element which has a spherical portion and a cap portion which at least partially surrounds it and is fixable at the coronal end of the implant body, wherein at least the cap portion is penetrated by the directed bore.

6. Method according to claim 1, **characterised in that** the substitute implant bodies arranged in the master pattern are initially connected to an adaptor placeable in form-fitting manner on said substitute implant bodies, wherein for alignment, the parts of the adaptor connected to each other in the manner of a ball joint are pivoted relative to one another and are fixed in a pivot position as set.

7. Method according to claim 6, **characterised in that**, in the pivotable portion of the adaptor, a bore provided with a thread is provided for receiving an aligning element and that, by means of rotation of the aligning element in the thread, fixing of the ball joint in the pivot position as set is carried out.

8. Method according to claim 1, **characterised in that** the substitute implant bodies arranged in the master pattern are initially connected to an adaptor placeable in form-fitting manner on said substitute implant bodies, said adaptor having an at least partially spherical head on which a sleeve body pivotable relative to said head is placed and is fixed as a fixing element in a directed pivot position relative to the spherical head.

9. Method according to claim 8, **characterised in that** for fixing the fixing element, a settable mass, in particular a wax, is used, which holds the fixing element in the aligned position on the spherical head of the adaptor.

## Revendications

1. Procédé pour la construction d'une superstructure prothétique sur au moins un corps d'implant implanté dans un os de mâchoire, dans lequel le corps d'implant est relié à un adaptateur dont la partie d'ancrage portant la partie de superstructure est soumise à une orientation adaptée au corps d'implant,
**caractérisé en ce qu'**un élément de transfert est posé sur le corps d'implant,
et une empreinte est prise en incluant celui-ci,
après quoi un corps d'implant prothétique est posé sur l'élément de transfert
et un maître-modèle incluant celui-ci est réalisé,
la partie de superstructure est formée sur le maître-modèle après orientation de la partie d'ancrage de l'adaptateur,
en utilisant pour l'orientation de la partie d'ancrage un gabarit de parallélisme qui possède des éléments d'orientation parallèles et ayant une angulation réglable par rapport à l'axe du corps d'implant,
et en réalisant à l'aide du gabarit de parallélisme un gabarit de perçage au moyen duquel on réalise un perçage ciblé dans un adaptateur pour la superstructure, la direction du perçage définissant l'orientation de la superstructure.

2. Procédé selon la revendication 1, **caractérisé en ce que** les éléments d'orientation sont pour l'essentiel en forme de goupilles et sont insérés à une extrémité, par des reliefs au moins en partie sphériques, dans le corps d'implant.

3. Procédé selon l'une des revendications 1 ou 2, **caractérisé en ce que** pour former le gabarit de perçage, un élément d'orientation est entouré d'une douille et une masse durcissable est disposée autour de celle-ci dans la position orientée des éléments d'orientation, laquelle masse retient la ou les douilles dans une position orientée par rapport au modèle et éventuellement entre elles après l'enlèvement des éléments d'orientation.

4. Procédé selon la revendication 3, **caractérisé en ce qu'**après le durcissement de la masse durcissable, celle-ci forme avec la ou les douilles qu'elle inclut un gabarit de perçage pour le forage dirigé d'un élément de fixation de la superstructure, et le ou les forages sont réalisés à travers la ou les douilles.

5. Procédé selon la revendication 4, **caractérisé en ce que** le forage est réalisé dans un élément de fixation qui comprend une partie sphérique et une partie de capuchon recouvrant au moins en partie celle-ci et pouvant être fixée à l'extrémité coronale du corps d'implant, la partie de capuchon, au minimum, étant traversée par le perçage dirigé.

6. Procédé selon la revendication 1, **caractérisé en ce que** les corps d'implant prothétique disposés dans le maître-modèle sont d'abord reliés à un adaptateur pouvant être posé en engagement positif par-dessus, les parties de l'adaptateur reliées entre elles par des articulations à rotule étant tournées les unes par rapport aux autres pour l'orientation et fixées dans une position de pivotement ajustée.

7. Procédé selon la revendication 6, **caractérisé en ce qu'**il est prévu dans la partie pivotante de l'adaptateur un trou fileté destiné à recevoir un élément d'orientation et **en ce que** la rotation de l'élément d'orientation dans le filetage permet de fixer l'articulation à rotule dans la position de pivotement ajustée.

8. Procédé selon la revendication 1, **caractérisé en ce que** les corps d'implant prothétique disposés dans le maître-modèle sont d'abord reliés avec un adaptateur pouvant être posé en engagement positif par-dessus, qui possède une tête au moins en partie sphérique sur laquelle un élément de douille pivotant par rapport à celle-ci est posé et fixé par rapport à la tête sphérique dans une position de pivotement ajustée pour servir d'élément de fixation.

9. Procédé selon la revendication 8, **caractérisé en ce qu'**on utilise pour la fixation de l'élément de fixation une masse durcissable, en particulier une cire, qui retient l'élément de fixation sur la tête sphérique de l'adaptateur dans la position orientée.
